# EUROPÄISCHE PATENTSCHRIFT

(11) **EP 3 746 213 B1**
(45) Veröffentlichungstag und Bekanntmachung des Hinweises auf die Patenterteilung: **09.03.2022**
(21) Anmeldenummer: 19705092.5
(22) Anmeldetag: 21.01.2019
(51) Int. Cl.: B01F 3/04, B01F 7/10, C02F 1/24, C02F 1/44, C02F 1/52, B01F 7/00

(54) **VORRICHTUNG UND VERFAHREN ZUM ERZEUGEN VON GASBLASEN IN EINER FLÜSSIGKEIT**
DEVICE AND METHOD FOR GENERATING GAS BUBBLES IN A LIQUID
DISPOSITIF ET PROCÉDÉ DE PRODUCTION DE BULLES DE GAZ DANS UN LIQUIDE

(30) Priorität: 29.01.2018 DE 102018101895
(43) Veröffentlichungstag der Anmeldung: 09.12.2020
(73) Patentinhaber: Akvola Technologies GmbH, 13507 Berlin (DE)
(72) Erfinder: BEERY, Matan, 10559 Berlin (DE); SCHULZ, Johanna, 14052 Berlin (DE); TYCHEK, Gregor, 13156 Berlin (DE); GABRYS, Thorsten, 10119 Berlin (DE)
(74) Vertreter: Maikowski & Ninnemann Patentanwälte Partnerschaft mbB
(86) Internationale Anmeldenummer: PCT/EP2019/051381
(87) Internationale Veröffentlichungsnummer: WO 2019/145257

(56) Entgegenhaltungen:
- DE-A1-102004 003 033
- DE-A1-102015 208 694

## Beschreibung

Die vorliegende Erfindung betrifft eine Vorrichtung zum Erzeugen von Gasblasen in einer Flüssigkeit, ein Verfahren zum Erzeugen von Gasblasen in einer Flüssigkeit unter Verwendung einer solchen Vorrichtung, eine Anlage zur Reinigung von Wasser umfassend einer derartige Vorrichtung sowie ein Verfahren zur Reinigung von Wasser unter Verwendung einer solchen Anlage.

### Beschreibung

Gasblasen in Flüssigkeiten sind für eine Reihe von verschiedenen Anwendungen notwendig, wie zum Beispiel für den Zweck des Lösens von Gas in der Flüssigkeit. Ein zunehmend interessanter und wichtiger Einsatzbereich von Gasblasen in Flüssigkeiten stellt die Reinigung von Wasser und anderen Flüssigkeiten im Rahmen eines sogenannten Flotationsverfahrens dar.

Flotation ist ein Schwerkraftabscheideverfahren zur Trennung von Fest-Flüssig- oder Flüssig-Flüssig-Systemen. Hierbei werden Gasblasen, zum Beispiel aus Luft, erzeugt und in die Flüssigphase eingeführt, wobei sich in der Flüssigphase befindliche hydrophobe Partikel, wie zum Beispiel organische Stoffe oder biologische Abfallprodukte, an diesen ebenfalls hydrophoben Blasen anlagern und durch den von den Gasblasen verursachten Auftrieb an die Oberfläche aufsteigen. An der Oberfläche der Flüssigphase sammeln sich diese Agglomerate zu einer Schlammschicht an, die leicht mechanisch abtrennbar ist.

Der Flotationseffekt ist dabei umso stärker ausgebildet je höher die spezifische Oberfläche der aufsteigenden Gase ist, an die sich die hydrophoben Partikel aus dem zu reinigenden Wasser anlagern können. Entsprechend ist die Ausbildung von Kleinstblasen mit Durchmessern von 10 bis 100 µm in Form eines Blasenschwarms (auch "white water" genannt) wünschenswert.

Eine Möglichkeit der Einführung von Gas in Form von kleinsten Blasen in die zu reinigende Flüssigkeit wird mittels des bekannten DAF Verfahrens (dissolved air flotation) bewirkt. Hierbei wird ein in einer Flüssigkeit bei erhöhtem Druck in gelöster Form vorliegendes Gas in die zu reinigende Flüssigkeit eingeführt und durch den Druckabfall in der zu reinigenden Flüssigkeit entweicht das Gas in Form kleinster Blasen, welche einen Durchmesser im Mikrometerbereich aufweisen. Das DAF Verfahren ermöglicht eine sehr gute Abscheidung von Mikroalgen anderen Kleinstorganismen, Ölen, Kolloiden, sowie anderen organischen und anorganischen Partikeln aus hochbeladenen Schmutzwasser, erfordert jedoch einen relativ hohen Energieverbrauch aufgrund der Einbringung von Luft in die Flüssigkeit mittels einer Sättigungskolonne verbunden mit einem hohen Energieverbrauch. Bei hohen Temperaturen (größer 30°C) und Salzgehalten (größer 30000 ppm) funktioniert das Verfahren immer ineffizienter oder auch gar nicht mehr.

Eine weitere Möglichkeit zur Einbringung von kleinsten Gasblasen in eine Flüssigkeit unter Vermeidung des im Rahmen des DAF Verfahrens anfallenden hohen Energieverbrauchs ist unter anderem in der WO 2013/167 358 A1 beschrieben, in welcher der Gaseintrag durch eine direkte Injektion eines Gases über eine Begasungsmembran in die zu reinigende Flüssigkeit erfolgt. Hierbei entfallen der sonst im DAF Verfahren übliche Recyclestrom und die Sättigungskolonne, da das Gas zum Beispiel direkt einer Druckluftleitung oder einer Gasflasche entnehmbar ist.

In der WO 2016/180853 A1 wird eine Vorrichtung zum Erzeugen von Gasblasen in einer Flüssigkeit, insbesondere von Mikroblasen, beschrieben, welche eine Blasenerzeugung mittels geeigneter Begasungsscheiben ermöglicht. Das komprimierte Gas wird hierzu in die horizontal gelagerte rotierbare Hohlwelle (aus innerer, kleinerer und äußerer, größerer Hohlwelle) eingeführt und durch die Begasungsscheiben, die zum Beispiel aus einer keramischen Membran mit einem Gaskanal bestehen, in die Flüssigkeit geleitet. Durch die Verwendung von zwei ineinander liegenden Hohlwellen wird eine gleichmäßige und symmetrische Druckverteilung innerhalb der größeren Hohlwelle ermöglicht. Dadurch werden die Scheiben symmetrisch mit Gas versorgt und es wird eine gleichmäßige Blasenproduktion im zu begasenden Medium erreicht. Nachteilig hierbei sind jedoch die aufwendige Konstruktion von einer inneren und äußeren Hohlwelle und die vorgegebene, notwendige Anordnung der Begasungsscheiben über einer Gaszufuhröffnung in der äußeren Hohlwelle, um einen effizienten Gaseintrag in die Begasungsscheiben zu bewirken.

Eine weitere Vorrichtung zum Erzeugen von Gasblasen in einer Flüssigkeit gemäß dem Oberbegriff des Anspruch 1 ist in der DE 10 2004 003033 A1 beschrieben.

Die Aufgabe der nachfolgenden Erfindung bestand somit darin, eine Vorrichtung zum Erzeugen von Gasblasen in einer Flüssigkeit bereitzustellen, welche kostengünstig herstellbar ist und einen kostengünstigen, praktikablen und langlebigen großtechnischen Einsatz, insbesondere im Rahmen der Reinigung von Schmutzwasser oder Salzwasser ermöglicht. Diese Aufgabe wird mit einer Vorrichtung mit den Merkmalen des Anspruchs 1 gelöst.

Entsprechend wird eine Vorrichtung zum Erzeugen von Gasblasen in einer Flüssigkeit in einem Behälter bereitgestellt, wobei die Vorrichtung folgende Elemente umfasst:
- mindestens eine in mindestens einem Behälter angeordnete rotierbare gasdurchlässige Hohlwelle,
- auf der mindestens einen Hohlwelle angeordnete Begasungsscheiben und zwischen den Begasungsscheiben angeordnete Abstandshalter, wobei Begasungsscheiben und Abstandshalter alternierend auf der Hohlwelle in einem gasdichten Kontakt zueinander angeordnet sind,
- mindestens eine Zuleitung für mindestens ein komprimiertes Gas in den Innenraum der mindestens einen rotierbaren Hohlwelle.

Erfindungsgemäß weist jeder der Abstandshalter mindestens eine zentrierte Öffnung (O) zur Aufnahme der Hohlwelle und mindestens zwei Kammern (K1, K2) auf, wobei die mindestens zwei Kammern (K1, K2) gleichmäßig beabstandet um die zentrierte Öffnung (O) herum angeordnet sind.

Erfindungsgemäß überlappen bzw. überschneiden sich die Radien der zentrierten Öffnung (O) und die Radien der mindestens zwei Kammern (K1, K2), so dass die zentrierte Öffnung (O) und die mindestens zwei Kammern (K1, K2) zumindest im Überlappungsbereich in offener Kommunikation miteinander stehen. Mit anderen Worten der Überlappungsbereich ist materialfrei.

Die offene Kommunikation der zentrierten Öffnung und der Kammern ermöglicht ein Einströmen des komprimierten Gases aus der Hohlwelle in jeweils mindestens eine der Kammern (K1, K2) des Abstandhalters. Das Gas kann dann weiter aus der mindestens einen Kammer (K1, K2) des Abstandshalters in die Begasungsscheiben eintreten.

Da bevorzugt eine Begasungsscheibe zwischen zwei Abstandshaltern angeordnet ist, wird das Gas aus der mindestens einen mit Gas gefüllten Kammer des Abstandshalters in den Zwischenraum zwischen zwei Abstandshaltern geleitet, wobei der Zwischenraum von einer Begasungsscheibe ausgefüllt ist, und aus diesem Zwischenraum über geeignete Gaszufuhr- bzw. Gaszugangsöffnungen in der Begasungsscheibe in die Begasungsscheibe geleitet. Dadurch werden die Scheiben symmetrisch mit Gas versorgt und es wird eine gleichmäßige Mikroblasenproduktion im zu begasenden Medium bzw. in der zu reinigenden Flüssigkeit erreicht.

In einer bevorzugten Ausführungsform umfasst die vorliegende Vorrichtung mindestens eine in dem mindestens einen Behälter horizontal angeordnete rotierbare gasdurchlässige Hohlwelle.

Die Begasungsscheiben können jede geometrische Form aufweisen, die für die beschriebene Funktion der Begasungsscheiben denkbar und sinnvoll ist.

In einer bevorzugten Ausführungsform sind auf dieser mindestens einen Hohlwelle kreisförmige Begasungsscheiben vertikal zur Hohlwelle und zwischen den Begasungsscheiben sind kreisförmige Abstandshalter vorgesehen, wobei Begasungsscheiben und Abstandshalter alternierend auf der Hohlwelle in einem gasdichten Kontakt zueinander angeordnet sind.

In einer anderen bevorzugten Ausführungsform weist jeder der Abstandshalter mindestens eine zentrierte kreisförmige Öffnung (O) zur Aufnahme der Hohlwelle und mindestens drei kreisförmige Kammern (K1, K2, K3) auf, wobei die mindestens drei Kammern (K1, K2, K3) gleichmäßig beabstandet um die zentrierte Öffnung (O) herum angeordnet sind. Die Anordnung der drei Kammern kann auch mit der Geometrie eine drei blättrigen Kleeblatts beschrieben werden. Es ist aber auch generell möglich, dass der Abstandshalter mehr als drei, z.B. vier, fünf oder sechs Kammern aufweist. Diese Kammern können auch in Form von Kreissegmenten ausgebildet sein.

Wie noch später ausgeführt weist die keramische Membran zum Beispiel eine Porengröße von zwei Mikrometer auf, welche die Bildung von Blasen mit einer Blasengröße zwischen 40 bis 60 µm bedingt. Aufgrund der Rotation der Hohlwelle und der auf der Hohlwelle gelagerten Keramikscheiben wirken Scherkräfte auf die aus den Keramikscheiben austretenden Gasblasen, welche Einfluss auf die Größe der Gasblasen und des Blasenschwarms haben. Die Stärke bzw. Größe der wirkenden Scherkräfte hat demnach einen unmittelbaren Einfluss auf die Effektivität der Blasenbildung. Die Stärke der Scherkräfte selbst wird wiederum von der Drehgeschwindigkeit der Hohlwelle beeinflusst, wobei die Drehgeschwindigkeit der Hohlwelle bis zu 400 rpm betragen kann.

An die in der Flüssigkeit in Form eines Blasenschwarmes gebildeten Blasen lagern sich in der Folge die in der Flüssigkeit befindlichen Schmutzpartikel (zum Beispiel organische Stoffe oder biologische Stoffe) an und steigen in Form eines entsprechenden Gasblasenagglomerats an die Flüssigkeitsoberfläche. Die in der Folge an der Flüssigkeitsoberfläche gebildete Feststoffschicht kann anschließend mechanisch abgetrennt werden. Durch die spezifische Kombination von (direkter) Gasinjektion in Zuleitung und Hohlwelle sowie die vertikale Anordnung der Abstandshalter und Begasungsscheiben auf der horizontalen Hohlwelle wird die Erzeugung von Kleinstblasen in einer energetisch und somit kostengünstigen Weise ermöglicht, die eine großindustrielle Applikation der Vorrichtung sinnvoll macht.

Wie oben ausgeführt, weist jeder Abstandshalter mindestens eine zentrierte Öffnung (O) mit einem Durchmesser dO zur Aufnahme der Hohlwelle und mindestens zwei, insbesondere mindestens drei kreisförmige Kammern (K1, K2, K3) mit jeweils einem Durchmesser dK1, dK2, dK3 auf.

Bevorzugterweise sind die Geometrien, insbesondere die Durchmesser der Kammern des Abstandshalters jeweils gleich. In einer Variante liegen diese Durchmesser zwischen 5 und 50 mm, bevorzugt zwischen 15 und 50 mm, bevorzugt zwischen 20 und 35 mm.

In einer Variante sind die Durchmesser der Kammern jeweils gleich und gleich dO. Es ist aber auch möglich, dass die Durchmesser der Kammern jeweils gleich sind, aber ungleich dO sind. In letzterem Fall kann dO z.B, zwischen 15 und 20 mm betragen und die Durchmesser der Kammern können kleiner 10 mm, z.B. zwischen 5 und 10 mm sein,

Generell sind die Durchmesser der Kammern und dO und somit der Welle und der Kammer variabel und werden jeweils aufeinander abgestimmt.

Die Dicke des Abstandshalters ist abhängig von der Breite des Tanks, in dem die vorliegende Vorrichtung verwendet wird, und der Anzahl der, zur Begasung benötigten, Begasungsscheiben. In einer Ausführungsform ist der Abstandshalter einstückig ausgebildet. Generell ist es aber auch möglich und vorstellbar, den Abstandshalter aus mehreren Teilen (z.B. drei Teilen) herzustellen und diese Teile gasdicht und kraftschlüssig miteinander zu verbinden, z.B. zu verkleben oder zu verschweißen.

In einer anderen Ausführungsform ist der Abstandshalter aus einem metallischen oder nichtmetallischen Material, bevorzugt Kunststoffgebildet. Als bevorzugtes Material kann z.B. Polyoxymethylen (POM) oder Polyvinylchlorid (PVC) verwendet werden.

In einer weitergehenden Ausführungsform weist der mindestens eine Abstandshalter mit einem äußeren Durchmesser dA_{außen} auf mindestens einer seiner kreisförmigen Seiten einen Absatz mit einem Durchmesser dA_{Absatz} auf, wobei dA_{Absatz} kleiner ist als dA_{außen}. Der Durchmesser bzw. Radius des Absatzes ist somit kleiner als der Gesamtdurchmesser des Abstandshalters. So kann der äußere Durchmesser dA_{außen} zwischen 50 und 150 mm, bevorzugt zwischen 70 und 120 mm, insbesondere bevorzugt zwischen 90 und 110 mm betragen und der Absatzdurchmesser dA_{Absatz} zwischen 30 und 100 mm, bevorzugt zwischen 50 und 90 mm. In einer Variante ist dA_{außen} z.B. 110 mm und dA_{Absatz} z.B. 89,9 mm. Generell gilt, dass der Absatzdurchmesser abhängig ist vom Innendurchmesser der Begasungsscheibe.

Dieser mindestens eine Absatz des Abstandshalters dient zur Aufnahme der Begasungsscheibe. Insbesondere kann der Absatz als ein Zentrierabsatz beschrieben werden, auf den die Begasungsscheibe aufgelegt wird. Zusätzlich ist eine Nut (O-Ring Nut) für die Abdichtung zwischen Begasungsscheibe und Abstandshalter vorgesehen. Der gasdichte Kontakt zwischen Abstandshalter und Begasungsscheibe wird durch Auflegen der Begasungsscheibe auf den Absatz des Abstandshalters und die Abdichtung zwischen Begasungsscheibe und Abstandshalter (am äußeren Radius der Abstandshalter) über den eingelegten O-Ring bewirkt.

In einer Ausführungsform liegt die Begasungsscheibe in Form eines Ringes mit einem inneren Umfang mit einem inneren Durchmesser dBᵢₙₙₑₙ und einem äußeren Umfang mit einem äußeren Durchmesser dB_{außen} vor, wobei der innere Durchmesser dBinnen der Begasungsscheibe (mit einer kleinen Toleranz von ca. 2/10 mm) dem Durchmesser dA_{Absatz} des Absatzes des Abstandshalters entspricht.

In einer weiteren Ausführungsform der vorliegenden Vorrichtung weist die Begasungsscheibe entlang des inneren Umfanges gleichmäßig verteilte Gasöffnungen auf. So können die Öffnungen ca. 2x5 mm groß sein und mit einem Abstand von 13 mm voneinander angeordnet sein. Größe und Abstand der Gasöffnungen kann jedoch beliebig gewählt sein.

Das über die Hohlwelle in die Kammern des Abstandshalters einströmende Gas verteilt sich im (gasdichten) von der Begasungsscheibe ausgefüllten Zwischenraum zwischen zwei Abstandshaltern und tritt in die Gasöffnungen der Begasungsscheibe ein.

Die Begasungsscheibe weist typischerweise einen äußeren Durchmesser zwischen 100 und 500 mm, bevorzugt zwischen 150 und 350 mm auf. Als besonders geeignetes Material für die Begasungsscheiben hat sich Keramik erwiesen, insbesondere Aluminiumoxid α-Al₂O₃. Jedoch sind auch andere keramische Oxide und Nicht-Oxide wie Siliciumcarbid oder Zirconiumoxid einsetzbar.

In einer weiteren Ausführungsform der vorliegenden Vorrichtung besteht die mindestens eine Begasungsscheibe aus einem keramischen Material mit einer mittleren Porengröße zwischen 0,05 µm und 20 µm, bevorzugt 0,1 und 10 µm, insbesondere bevorzugt zwischen 2 und 5 µm. Eine Porengröße von 2 µm oder 3 µm ist dabei am vorteilhaftesten.

Der mittlere Blasendurchmesser, der über die Begasungsscheibe beziehungsweise Begasungsmembran in die Flüssigkeit eingetragenen Gasblasen, kann zwischen 10 µm bis 200 µm, bevorzugt zwischen 20 µm bis 100 µm, insbesondere bevorzugt 30 bis 80 µm, ganz besonders bevorzugt 50 µm betragen. Die Blasenerzeugung an der Begasungsmembran beziehungsweise Begasungsscheibe kann insbesondere über einen geeigneten Gasvolumenstrom und Druck beeinflusst werden. Je höher der Druck ist, desto mehr und desto größere Blasen entstehen dabei. Der eingestellte Volumenstrom spielt dabei im vorliegenden Fall eine lediglich untergeordnete Rolle.

Es ist weiterhin vorgesehen, dass auf der mindestens einen rotierbaren Hohlwelle zwischen 2 und 100, bevorzugt zwischen 10 und 50, insbesondere bevorzugt zwischen 15 und 30 Begasungsscheiben und Abstandshalter angeordnet sind.

In einer Variante der vorliegenden Vorrichtung rotiert die mindestens eine Hohlwelle mit einer Drehgeschwindigkeit zwischen 50 und 400 rpm, bevorzugt zwischen 100 und 300 rpm, insbesondere bevorzugt zwischen 180 und 220 rpm. Die Rotationsgeschwindigkeit ist abhängig von der Größe der Begasungsscheiben. So kann die Rotationsgeschwindigkeit bei kleinen Begasungsscheiben (z.B. d = 152 mm) bei 180-200 rpm liegen, während die Rotationsgeschwindigeit bei großen Begasungsscheiben (z.B. d = 312 mm) bei 100-120 rpm liegt. Die Drehgeschwindigkeit der Hohlwellen und somit auch die Drehgeschwindigkeit der Begasungsscheiben wie auch Gasmenge und Gasdruck lassen sich während des Betriebes der Vorrichtung je nach gewünschter Blasenbildung, das heißt Menge und Größe der Blasen, online (life) ändern.

In einer weiteren Variante der vorliegenden Vorrichtung ist das einzutragende mindestens eine komprimierte Gas ausgewählt aus einer Gruppe bestehend aus Luft, Kohlendioxid, Stickstoff, Ozon, Methan oder Erdgas. Methan findet insbesondere Verwendung bei der Entfernung von Öl und Gas aus einer Flüssigkeit, wie zum Beispiel im Falle der Reinigung einer beim Fracking angefallenen Flüssigkeit. Ozon wiederum kann aufgrund seiner oxidativen und antibakteriellen Eigenschaften zur Reinigung von Wasser aus der Aquakultur verwendet werden.

Das komprimierte Gas wird wie oben beschrieben in die mindestens eine Zuleitung und in der Folge somit in die mindestens eine Hohlwelle direkt ohne Flüssigkeitsträger eingetragen. Entsprechend erfolgt eine direkte Injektion des komprimierten Gases direkt aus einem Gasreservoir, wie zum Beispiel einer Gasflasche oder einer entsprechenden Gasleitung. Das Gas benötigt demnach keinen Flüssigkeitsträger, wie das zum Beispiel im Falle der DAF Vorrausetzung ist, so dass ein Recyclestrom und eine Sättigungskolonne wegfallen und auch keine Verdichtungsenergie für das Erreichen eines hohen Druckniveaus im DAF Recyclestrom benötigt wird. Ein weiterer Vorteil der direkten Injektion eines komprimierten Gases ohne Flüssigkeitsträger ist der, dass eine einfache und energiearme Erzeugung von Mikroblasen ermöglicht wird.

Der Gasdruck des in die mindestens eine Hohlwelle eingetragenen Gases beträgt zwischen 1 und 5 bar, bevorzugt zwischen 2 und 3 bar. Um dieses Druckniveau in der Hohlwelle zu erreichen wird das mindestens eine komprimierte Gas mit einem Druck zwischen 5 und 10 bar in die Gaszuleitung eingeführt. Generell gilt, dass der Druck des eingeführten Gases größee sein muss als die Summe aus Druck in der Welle und Druckverlusten. Der Druckverlauf innerhalb der Hohlwelle ist bevorzugterweise konstant.

In einer weiteren Variante der vorliegenden Vorrichtung wird die mindestens eine Hohlwelle aus Edelstahl, wie zum Beispiel V2A oder 4VA, Duplex oder Super Duplex Material, oder Kunststoff hergestellt. Der Gesamtdurchmesser der Hohlwelle beträgt zwischen 10 und 50 mm.

Die Hohlwelle besteht aus einem gasdurchlässigen Material (z.B. perforierten Material), so dass das Gas aus dem Innenraum der Hohlwelle in die Kammern des Abstandshalters und von dort in die Begasungsscheiben eintreten kann. Die Gasdurchlässigkeit des Materials der Hohlwelle kann durch Löcher mit einem Durchmesser von 1 bis 5 mm bewirkt werden, die an verschiedenen Positionen angeordnet bzw. verteilt sind. Auch wäre die Verwendung von in das Material eingefügten Schlitzen oder eines (steifen) Netzes vorstellbar.

Die Hohlwelle besitzt an ihren beiden Enden jeweils ein sog. Wellenendstück. Die Wellenendstücke dienen zum einen dem gasdichten Abschluss der Begasungsscheiben-Abstandshalter-Kombination, zum zweiten dem Verspannen dieser Kombination und zum dritten der Aufnahme einer entsprechenden Wellenlagerung der Hohlwelle. Weiterhin ist vorgesehen, dass die mindestens eine Hohlwelle über die Wellenendstücke in jeweils zwei Wellenhalterungen mit entsprechenden Lagern angeordnet.

An einem Ende bzw. an einem Wellenendstück sind in einer besonderen Variante die mindestens eine Zuleitung für das komprimierte Gas in die Hohlwelle und mindestens ein Antrieb zur Rotation der Hohlwelle gemeinsam vorgesehen. Luftzufuhr und Hohlwellenantrieb sind somit auf der gleichen Seite bzw. am gleichen Ende der Hohlwelle in einem Teil angeordnet. Es ist aber auch möglich, dass Luftzufuhr und Antrieb an verschiedenen bzw. gegenüberliegenden Enden der Hohlwelle vorgesehen sind. Die Abdichtung und Luftzufuhr an der Antriebsseite erfolgt mit Hilfe einer modifizierten Gleitringdichtung. Motoren zum Antrieb von Hohlwellen sind bekannt und können vielfältig in Abhängigkeit von der Größe der Anlage ausgewählt werden.

Das Antriebs- und Gaszufuhrseitige Wellenendstück ist mit der Hohlwelle stofflich verbunden. Dadurch entsteht eine gasdichte sowie zug- und verdrehfeste Verbindung. Auf der dem Antrieb gegenüberliegenden Seite befindet sich eine Wellenmutter. Die äußere Welle dient als Zuganker. Durch das verschiebbar auf der Hohlwelle sitzende Wellenendstück, auf der dem Antrieb abgewandten Seite, wird, durch Anziehen der Wellenmutter, die Begasungsscheiben-Abstandshalter-Kombination, mit den dazwischen liegenden O-Ringen, verspannt und zum Medium gasdicht abgedichtet.

Die Anordnung des Antriebes für die Vorrichtung kann außerhalb oder innerhalb des Beckens oder Behälters, in welcher die Vorrichtung eingetaucht und verwendet wird, angeordnet sein.

Die erfindungsgemäße Vorrichtung wird in einem Verfahren zum Erzeugen von Gasblasen in einer Flüssigkeit in einem Behälter gemäß dem Anspruch 14 verwendet, wobei das Verfahren die folgenden Schritte umfasst:
- Einführen eines komprimierten Gases in die mindestens eine Zuleitung, wobei das komprimierte Gas bevorzugt direkt ohne Flüssigkeitsträger in die Zuleitung eingetragen wird;
- Einführen des komprimierten Gases in den Innenraum der mindestens einen, insbesondere horizontal angeordneten rotierbaren Hohlwelle, wobei die mindestens eine Hohlwelle mit einer Drehgeschwindigkeit zwischen 50 und 400 rpm, bevorzugt zwischen 100 und 300 rpm, insbesondere bevorzugt zwischen 180 und 220 rpm rotiert, und
- Eintragen des komprimierten Gases über die insbesondere vertikal auf der rotierenden Hohlwelle angeordneten Abstandshalter und Begasungsscheiben in die Flüssigkeit unter Erzeugung von Gasblasen.

Mit dem vorliegenden Verfahren ist es möglich Blasen in der Flüssigkeit mit einer Blasengröße zwischen 1 µm und 200 µm, bevorzugt zwischen 20 µm und 100 µm, insbesondere bevorzugt zwischen 30 und 89 µm, ganz besonders bevorzugt zwischen 45 µm und 50 µm zu erzeugen.

In einer bevorzugten Variante wird die vorliegende Vorrichtung zum Erzeugen von Gasblasen in einer Anlage zur Reinigung einer Flüssigkeit, bevorzugt von Wasser, insbesondere zur Reinigung von Salzwasser beziehungsweise dessen Vorreinigung, von schlammhaltigen Abwässern und anderen verschmutzten Flüssigkeiten verwendet.

Eine solche Anlage zur Reinigung einer Flüssigkeit, wie zum Beispiel Wasser, umfasst , mindestens einen Behälter mit einer Vorrichtung zum Erzeugen von Gasblasen gemäß der obigen Beschreibung und mindestens einen Behälter (Flotationszelle) zur Aufnahme von der mindestens einem mit Gasblasen versetzten Flüssigkeit, wobei dieser Behälter mindestens eine Filtrationseinheit zur Abtrennung von in der Flüssigkeit enthaltenen organischen Bestandteilen aufweist.

In einer Variante der vorliegenden Anordnung kann dem Behälter mit der Vorrichtung zur Gasblasenerzeugung mindestens eine Flockulationseinheit zur Aufnahme der zu reinigenden Flüssigkeit und zur Aufnahme von mindestens einem Flockungsmittel zur Ausflockung von in der Flüssigkeit enthaltenen Bestandteilen vorgeschaltet sein.

In einer weiteren Variante der vorliegenden Anlage sind die mindestens eine Flockulationseinheit, die mindestens eine Vorrichtung zur Erzeugung von Gasblasen und der mindestens eine Behälter (Flotationszelle) mit der mindestens einen Filtrationseinheit derart zueinander angeordnet, dass diese miteinander in flüssiger Kommunikation stehen, so dass die mit dem Ausflockungsmittel versetzte zu reinigende Flüssigkeit aus der Flockulationseinheit in die Vorrichtung zur Erzeugung von Gasblasen und in der Folge aus dieser Vorrichtung in den Behälter (Flotationszelle) mit der Filtrationseinheit transportiert wird.

Die Flockulationseinheit kann entweder als eine von den anderen Behältern getrennte separate Einheit ausgebildet sein oder mit den weiteren Behältern einstückig verbunden sein. Die zu reinigende Flüssigkeit, wie zum Beispiel das zu reinigende Wasser, wird ein geeignetes Ausflockungsmittel, wie zum Beispiel Fe³⁺ oder Al³⁺ Salze zum Beispiel FeCl₃, eingeführt und gegebenenfalls unter Verwendung eines Rührers oder eines statischen Mischers intensiv mit der Flüssigkeit vermischt. Die in der Flockulationseinheit mit dem Ausflockungsmittel versetzte Flüssigkeit wird anschließend bevorzugter Weise in den mindestens einen Behälter mit der Vorrichtung zur Erzeugung der Gasblasen in Form eines Flüssigkeitsstromes überführt, wobei der Flüssigkeitstrom in diesem Behälter mit über die Vorrichtung zum Erzeugen von Gasblasen eingeführten Gasblasen versetzt wird.

Das sich dabei ausbildende Agglomerat aus Gasblasen und ausgeflockten organischen Bestandteilen wird anschließend in dem weiteren Behälter (Flotationszelle) mit der mindestens einen Filtrationseinheit eingespeist, wobei das Gasblasenagglomerat und die ausgeflockten organischen Bestandteile in der Flotationszelle an die Oberfläche der Flüssigkeit aufsteigen, sich dort ansammeln und mechanisch abgetrennt werden. Die auf diese Weise von der Mehrheit der organischen Bestandteile befreite Flüssigkeit wird abschließend durch die an der Bodenfläche der Flotationszelle angeordnete Filtrationseinheit abgezogen und weiteren Behandlungsschritten zugeführt. Entsprechend ist in einer Ausführungsform der vorliegenden Anlage die mindestens eine Filtrationseinheit in der Flotationszelle unterhalb der durch die aufgetriebenen, ausgeflockten organischen Bestandteile gebildeten Schicht angeordnet. Es ist insbesondere bevorzugt, wenn die mindestens eine Filtrationseinheit am Boden der Flotationszelle angeordnet ist und entsprechend getaucht in dem Flüssigkeitsbereich der Flotationszelle vorgesehen ist.

Die Filtrationseinheit weist insbesondere eine an den Behälter (Flotationszelle) angepasste rechteckige Form auf. Die Länge der Filtrationseinheit entspricht bevorzugter Weise dem 0,5 bis 0,8fachen, insbesondere bevorzugt dem 0,6fachen der Länger der Flotationszelle. Die Breite der Filtrationseinheit entspricht bevorzugter Weise dem 0,6 bis 0,9fachen, insbesondere bevorzugt dem 0,8 fachen der Breite der Flotationszelle. Somit erstreckt sich die Filtrationseinheit nicht vollständig über die gesamte Breite der Flotationszelle, sondern weist vielmehr einen geringen Abstand zu den länglichen Seitenwänden derselbigen auf. In der Höhe ist die Filtrationseinheit so ausgebildet, dass diese in einem Bereich zwischen dem 0,1 bis 0,9fachen, bevorzugt 0,6 bis 0,7fachen der Höhe des Behälters (Flotationszelle) entspricht. Selbstverständlich sind auch andere Dimensionen für die zum Einsatz kommende Filtrationseinheit denkbar.

In einer bevorzugten Ausführungsform liegt die mindestens eine Filtrationseinheit in Form einer keramischen Filtrationsmembran, insbesondere in Form einer keramischen Mikro- oder Ultrafiltrationsmembran vor. Derartige keramische Filtrationsmembranen weisen eine hohe chemische Beständigkeit und lange Lebensdauer auf. Außerdem sind keramische Filtrationsmembranen wasserdurchlässiger und weniger anfällig zu Fouling, da sie eine höhere Hydrophilität als Polymermembrane aufweisen. Aufgrund ihrer mechanischen Stabilität wird auch keine Vorsiebung benötigt. Als besonders geeignet hat sich ein Membranmodul erwiesen, das eine mittlere Porengröße von 20 nm bis 500 nm, bevorzugt von 100 nm bis 300 nm, insbesondere bevorzugt von 200 nm aufweist. Das bevorzugt verwendete Filtrationsmembranmodul kann aus mehreren Platten, einem oder mehreren Rohren oder weiteren geometrischen Formen entstehen. Als besonders geeignetes keramisches Material hat sich Aluminiumoxid in Form von α-Al₂O₃ erwiesen, jedoch sind auch andere keramische Oxide oder Nicht-Oxide wie Siliciumcarbid oder Zirkoniumoxid zur Verwendung in der Filtrationseinheit einsetzbar.

In weiteren bevorzugten Ausführungsform umfasst die Anlage, hier insbesondere die Flotationszelle, ein Mittel zur Belüftung der Filtrationseinheit, um die mindestens eine Filtrationseinheit in geeigneter Weise zu belüften. Ein geeignetes Belüftungsmittel kann zum Beispiel in Form von gelochten Schläuchen oder Rohren vorliegen. Das Belüftungsmittel kann mit Luft gespeist werden, um große Scherkräfte auf der Oberfläche der Filtrationseinheit zur Vermeidung oder Minimierung von Fouling auf der Membranoberfläche aufzubringen. Weitere Möglichkeiten zur Verhinderung beziehungsweise Reduzierung des Foulings der Filtrationseinheit sind die Behandlung mit geeigneten chemischen Substanzen, wie Zitronensäure zur Verhinderung eines anorganischen Foulings beziehungsweise einem geeigneten Oxidationsmittel, wie zum Beispiel Natriumhydrochlorid zur Reduzierung des biologischen Foulings.

Entsprechend kann die beschriebene Anlage in einem Verfahren zur Reinigung einer Flüssigkeit, insbesondere zur Reinigung von Wasser wie zum Beispiel zur Reinigung oder Vorreinigung von Meerwasser verwendet werden. Ein solches Verfahren umfasst dabei die Schritte:
- optionales Einführen der zu reinigenden Flüssigkeit in mindestens eine Flockulationseinheit und Zugabe von mindestens einem Ausflockungsmittel zu der zu reinigenden Flüssigkeit zur Ausflockung von in der Flüssigkeit enthaltenden Bestandteilen wie zum Beispiel organischen Bestandteilen,
- Überführen der optional mit dem mindestens einem Ausflockungsmittel versetzten Flüssigkeit in mindestens einem nachgeordneten Behälter mit einer Vorrichtung zum Erzeugen von Gasblasen und Kontaktieren der optional mit dem Ausflockungsmittel versetzten Flüssigkeit mit dem in diesem Behälter eingetragenen Gasblasen zur Ausbildung eines Gasblasen-Agglomerats, insbesondere eines Flocken-Mikro-Gasblasen-Agglomerats,

- Überführen der mit den Gasblasen und dem optionalen Ausflockungsmittel versetzten Flüssigkeit in eine Flotationszelle, wobei das an die Oberfläche der Flotationszelle gestiegene Gasblasen-Agglomerat abgetrennt wird, und
- Abziehen der von dem Gasblasen-Agglomerat befreiten Flüssigkeit durch die die mindestens eine in der Flotationszelle angeordnete Filtrationseinheit, und
- Zuführen der durch die Filtrationseinheit abgezogenen Flüssigkeit zu weiteren Behandlungsschritten.

Das vorliegende Verfahren stellt entsprechend einen Hybridprozess aus Gasblasenerzeugung unter Verwendung von vertikal auf eine Hohlwelle angeordneten Begasungsscheiben, Mikroflotation und Membranfiltration in einer singulären Vorrichtungseinheit dar.

Die Erfindung wird nachfolgend unter Bezugnahme auf die Figuren der Zeichnungen an einem Ausführungsbeispiel näher erläutert. Es zeigen:
- Figur 1A: eine erste schematische Seitenansicht einer Vorrichtung zur Gasblasenerzeugung in einer Flüssigkeit gemäß einer Ausführungsform,
- Figur 1B: eine zweite schematische Seitenansicht einer Vorrichtung zur Gasblasenerzeugung in einer Flüssigkeit gemäß einer Ausführungsform,
- Figur 2A: eine erste schematische Seitenansicht eines in der Vorrichtung zur Gasblasenerzeugung in einer Flüssigkeit verwendeten Abstandshalters;
- Figur 2B: eine zweite schematische Ansicht eines in der Vorrichtung zur Gasblasenerzeugung in einer Flüssigkeit verwendeten Abstandshalters;
- Figur 2C: eine dritte schematische Ansicht eines in der Vorrichtung zur Gasblasenerzeugung in einer Flüssigkeit verwendeten Abstandshalters;
- Figur 3A: eine schematische Ansicht eines Wellenendstücks der Hohlwelle mit Luftzufuhr und Antrieb;
- Figur 3B: eine schematische Ansicht einer ersten Variante einer Anordnung eines Antriebes für die Vorrichtung (Slide-in-Version);
- Figur 3C: eine schematische Ansicht einer zweiten Variante einer Anordnung eines Antriebes für die Vorrichtung (Drop-in-Version);
- Figur 4: eine schematische Seitenansicht einer Anlage zur Reinigung einer Flüssigkeit umfassend eine Vorrichtung zur Erzeugung von Gasblasen.

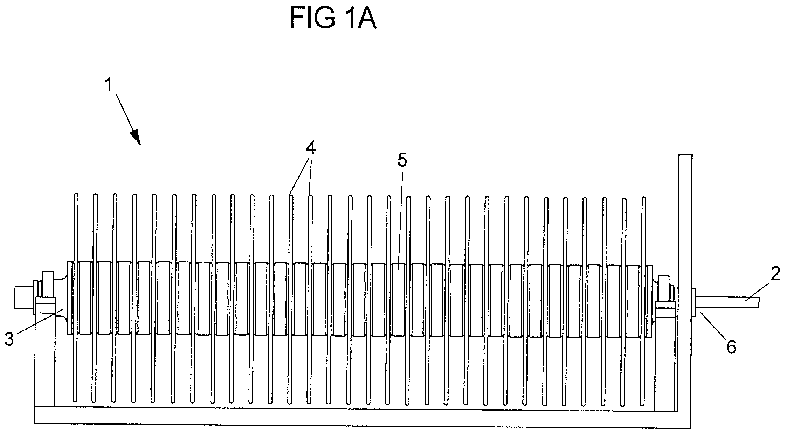

Ein allgemeiner Aufbau einer ersten Ausführungsform der erfindungsgemäßen Vorrichtung zur Erzeugung von Gasblasen ist in Figur 1A gezeigt.

Die Seitenansicht der Figur 1A umfasst eine Vorrichtung 1 mit einer Zuleitung 2 für die Zuleitung des komprimierten Gases, einer Hohlwelle 3 und mit auf der Hohlwelle 3 alternierend angeordneten Begasungsscheiben 4 und Abstandshaltern 5. Das komprimierte Gas wird durch die Hohlwelle 3 in die Abstandshalter 5 und weiter in die Begasungsscheiben 4 eingeleitet.

In der in Figur 1A gezeigten Ausführungsform sind auf der Hohlwelle mehrere kreisförmige Begasungsscheiben aus einem keramischen Material angeordnet. Die Keramikscheiben bestehen aus Aluminiumoxid, weisen einen äußeren Durchmesser von 152 mm und einen inneren Durchmesser von 25,5 mm auf. Die Membranoberfläche beträgt zwischen 0,036 m² und die Porengröße der Begasungsscheiben liegt in einem Bereich von 2 µm. Das Gas wird aus der Hohlwelle 3 in einen Hohlraum der Keramikscheibe 4 eingeleitet und dringt aus dem Hohlrauminneren durch die Poren des Keramikmaterials in die zu reinigende Flüssigkeit, die um und oberhalb der mit den Begasungsscheiben versehenen Hohlwelle vorgesehen ist, unter Ausbildung von Mikroblasen mit einer Blasengröße von ca. 45 bis 50 µm ein. Die Begasungsscheiben 4 sind auf der Hohlwelle mittels Edelstahl- oder Kunststoffbefestigungen angeordnet. Der Abstand der Begasungsscheiben voneinander entspricht der Dicke der Abstandshalter 5.

Zusammen mit der Gaszuleitung 2 ist an demselben Wellenendstück eine geeignete Vorrichtung 6 zur Bewegung der Hohlwelle vorgesehen. Diese Vorrichtung kann in Form eines Motors vorgesehen sein, der die entsprechende Rotationsbewegung über mehrere Getriebe auf die Hohlwelle überträgt.

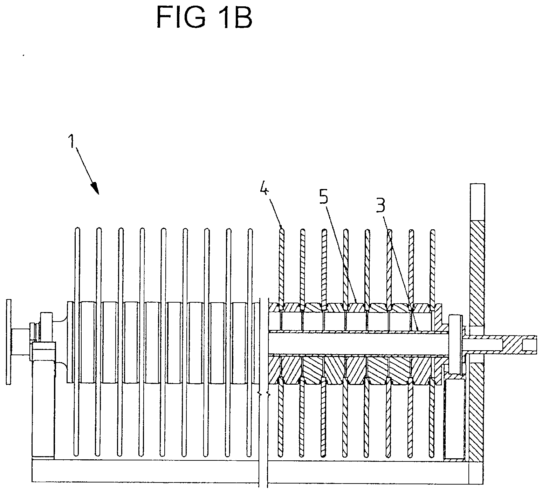

Die in Figur 1B gezeigte Ausführungsform illustriert den Aufbau der Hohlwelle 3 und die Anordnung der Abstandshalter 5 und der Begasungsscheiben 4 auf der Hohlwelle 3.

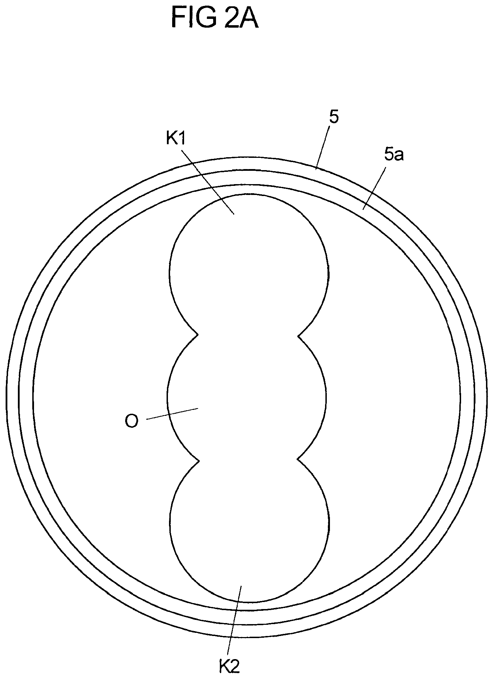

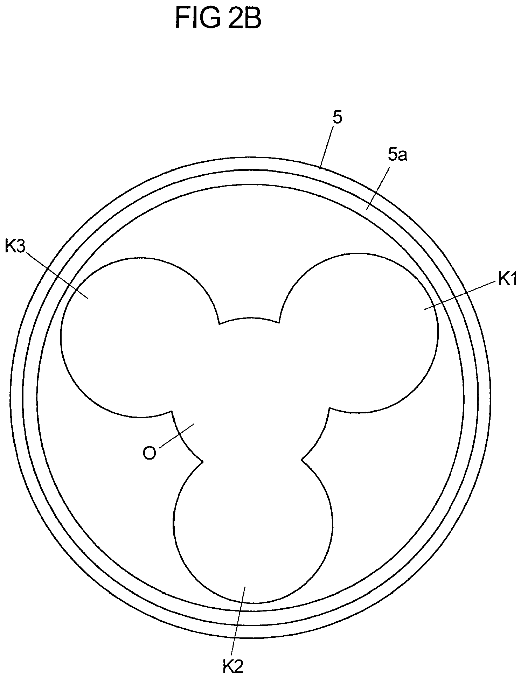

Begasungsscheiben 4 und Abstandshalter 5 sind in einem gasdichten Kontakt alternierend auf der Hohlwelle 3 angeordnet. Der gasdichte Kontakt wird durch die spezifische Konstruktion des Abstandshalters 5 bewirkt (siehe auch Fig. 2A-C). Das Gas gelangt über die Zuleitung 2 in die Hohlwelle 3, wird von dort in den Abstandshalter 5 eingeleitet und von dort in die Begasungsscheiben. Somit werden die keramischen Begasungsscheiben 4 mit Gas versorgt und eine gleichmäßige Blasenproduktion im zu begasenden Medium wird erreicht. Die Hohlwelle 3 kann aus metallischen sowie nichtmetallischen Werkstoffen gefertigt sein.

Die Abstandshalter sind detaillierter in den Figuren 2A bis 2C gezeigt. Jeder der Abstandshalter 5 weist eine zentrierte Öffnung (O) mit einem Durchmesser dO zur Aufnahme der Hohlwelle und mindestens zwei oder drei, insbesondere kreisförmige Kammern (K1, K2, K3) mit jeweils einem Durchmesser dK1, dK2, dK3 auf. Im Falle der in den Figuren 2A-Cgezeigten Ausführungsform betragen die Durchmesser dK1, dK2, dK3 und dO jeweils 35 mm. Diese Werte sind jedoch variabel und hängen von der Gesamtgröße der Vorrichtung ab.

Die Radien der zentrierten Öffnung (O) und die Radien der zwei oder drei kreisförmigen Kammern (K1, K2, K3) überlappen bzw. überschneiden sich, so dass die zentrierte Öffnung (O) und die zwei oder drei Kammern (K1, K2, K3) zumindest im Überlappungsbereich 5b in offener Kommunikation miteinander stehen. Die offene Kommunikation der zentrierten Öffnung und der Kammern ermöglicht ein Einströmen des komprimierten Gases aus der Hohlwelle in jeweils mindestens eine der Kammern K1, K2, K3 des Abstandhalters 5. Das Gas kann dann weiter aus einer der Kammern K1, K2, K3 des Abstandshalters 5 in die Begasungsscheiben 4 eintreten.

In den Ausführungsformen der Figuren 2A - 2C weist der eine Abstandshalter 5 mit einem äußeren Durchmesser dA_{außen} auf seinen kreisförmigen Seiten einen Absatz 5a in Form eines Zentrierabsatzes mit einem Durchmesser dA_{Absatz} auf, wobei dA_{Absatz} kleiner ist als dA_{außen.}.

Der Absatz 5a des Abstandshalters dient zur Aufnahme bzw. zum Kontakt mit der Begasungsscheibe 4. Der gasdichte Kontakt zwischen Abstandshalter 5 und Begasungsscheibe 4 wird durch Auflegen der Begasungsscheibe 4 auf den Absatz 5a des Abstandshalters 5 und die Abdichtung zwischen Begasungsscheibe und Abstandshalter (am äußeren Radius der Abstandshalter) bewirkt.

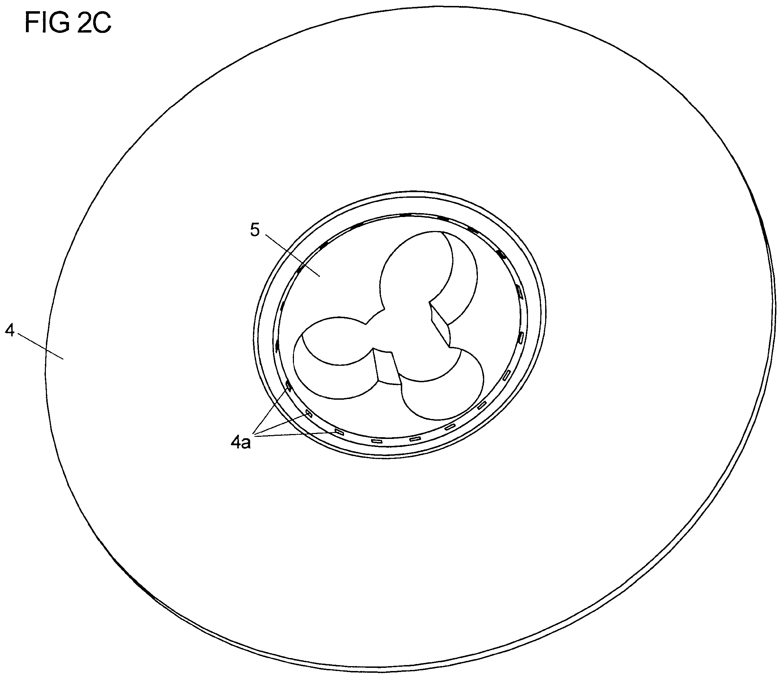

Die Begasungsscheibe 4 liegt in Form eines Ringes mit einem inneren Umfang mit einem inneren Durchmesser dBᵢₙₙₑₙ und einem äußeren Umfang mit einem äußeren Durchmesser dB_{außen} vor, wobei der innere Durchmesser dBᵢₙₙₑₙ der Begasungsscheibe dem Durchmesser dA_{Absatz} des Absatzes des Abstandshalters entspricht (siehe Fig. 2C).

Entlang des inneren Umfanges der Begasungsscheibe sind gleichmäßig verteilte Gasöffnungen 4a vorgesehen (siehe Fig. 2C).

Das Einleiten des Gases aus einer Kammer K1, K2, K3 des Abstandshalters in eine Begasungsscheibe 4 ergibt sich aus dem Umstand, dass eine Begasungsscheibe 4 jeweils zwischen zwei Abstandshaltern 5 angeordnet ist. Das Gas wird aus der mit Gas gefüllten Kammer des Abstandshalters in den Zwischenraum zwischen zwei Abstandshaltern geleitet, wobei der Zwischenraum von einer Begasungsscheibe ausgefüllt ist, und weiter aus diesem Zwischenraumüber geeignete Gaszufuhr- bzw. Gaszugangsöffnungen in der Begasungsscheibe in die Begasungsscheibe geleitet.

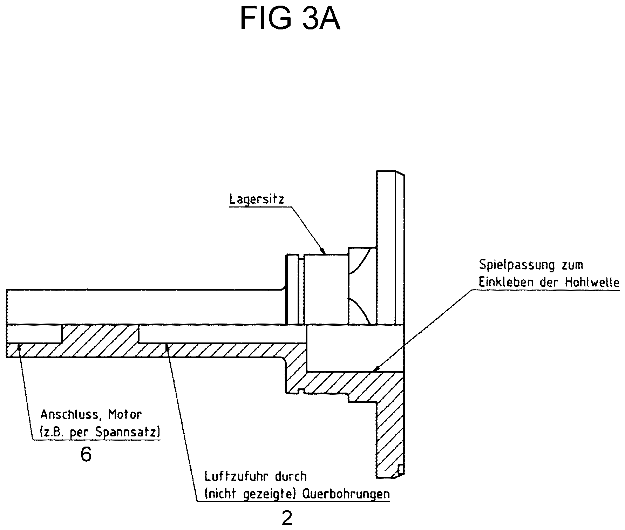

In Figur 3A ist ein Wellenendstück gezeigt, in welchem die Luftzufuhr 2 und Antrieb 6 kombiniert vorliegen. Der Antrieb 6 für die rotierende Bewegung der Welle kann direkt an der Welle stattfinden, aber auch über verschiedene mechanische Kraftumlenkungen angetrieben werden. Z.B.: Kegelradgetriebe, untersetztes 90° Getriebe. Somit kann der Antrieb 6 der Welle zum einen im zu begasenden Medium, zum anderen aber auch außerhalb des zu begasenden Mediums seine Position finden. Der Antrieb 6 kann über alle bekannten Antriebsarten (z.B.: elektrisch/ über Wasserkraft/ über Luftdruck) gestellt werden.

Die Welle 3 wird an mindestens zwei Positionen gelagert, verschiedene Wälzlagerarten können Einsatz finden, z.B.: Kugellager, Rillenkugellager, Nadellager, Walzenlager, Gleitlager.

Der Gaseintrag 2 in die rotierende Welle muss über mindestens eine Dichtung erfolgen. Diese kann innerhalb sowie außerhalb des zu begasenden Mediums positioniert sein.

Die Abdichtung des Wellenendstücks zur ersten Begasungsscheibe oder zum ersten Abstandshalter erfolgt über einen O-Ring. Die O-Ring-Nut kann dabei in das Wellenendstück eingestochen sein.

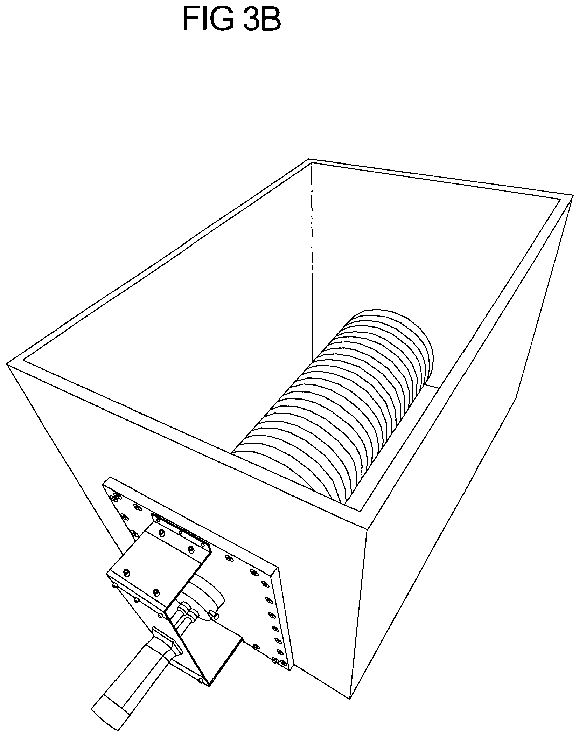

In Figur 3B ist eine erste Variante (slide-in-version) für die Anordnung des Antriebes 6 (Motor) der Vorrichtung 1 gezeigt. Der Antrieb 6 befindet sich hier außerhalb des Beckens oder Behälters, in welcher die Vorrichtung 1 eingetaucht und verwendet wird. Die Übersetzung erfolgt über eine Drehdurchführung an der Wand des Behälters.

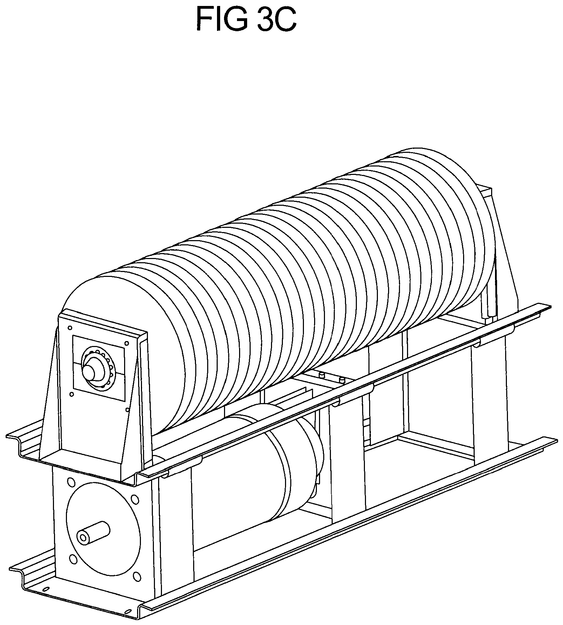

Figur 3C zeigt eine zweite Variante (drop-in-version) für die Anordnung des Antriebes 6 (Motor) der Vorrichtung 1. Hier befindet sich der Antrieb 6 innerhalb des Beckens oder Behälters, in welcher die Vorrichtung 1 eingetaucht und verwendet wird. Diese Ausführungsvariante erlaubt eine einfache Integration der Vorrichtung in bestehende Systeme, da keine Löcher durch die Behälterwand gebohrt werden müssen.

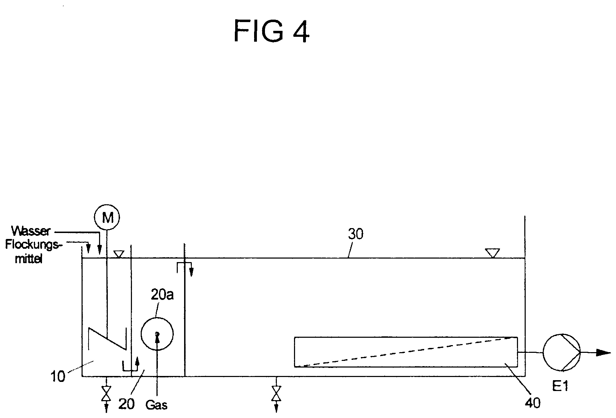

Figur 4 wiederum zeigt eine schematische Darstellung einer Anlage 20 zur Reinigung einer Flüssigkeit, insbesondere von Wasser, welche mindestens eine der obigen Ausführungsformen einer Vorrichtung zur Gasblasenerzeugung umfasst. Die Seitenansicht der Anlage 20 in Figur 4 zeigt eine Flockulationseinheit 10, in welche das zu reinigende Wasser und das Flockungsmittel eingetragen werden. Nach Vermischen des zu reinigenden Wassers mit dem Flockungsmittel, zum Beispiel unter Verwendung eines Rührers, kann das Gemisch aus der Flockulationseinheit 10 über eine Trennwand in einen weiteren, separaten Abschnitt bzw. Behälter 20 eingeführt werden, in welchem mindestens eine Hohlwelle 20a mit vier Begasungsscheiben gemäß der Ausführungsform der Figur 1 vorgesehen ist.

Im vorliegenden experimentellen Verfahren wird Schmutzwasser verwendet, das mit Huminstoffen versetzt wurde. Die Gesamtheit der organischen Stoffe im Schmutzwasser wird hierbei durch Huminstoffe simuliert, welche auch in der Natur durch normale biologische Verwesung entstehen. Zur Ausflockung der im Wasser enthaltenen Huminstoffe bieten sich vor allem dreiwertige Ionen enthaltene eisen- und aluminiumhaltige Substanzen als Fällungsmittel an. Im vorliegenden Fall wird eine FeCl₃-Lösung zur als Ausflockungsmittel verwendet. Nach Zugabe des Ausflockungsmittels unter Verwendung eines statischen Mischers erfolgt in der Flockulationseinheit 10 eine Ausflockung der im Schmutzwasser enthaltenen Huminsäuren durch das Flockungsmittel FeCl₃.

Das mit FeCl₃ versetzte Schmutzwasser wird im Anschluss aus der Flockulationseinheit 10 in dem die Begasungsvorrichtung bestehend aus einer Hohlwelle mit vier Begasungsscheiben enthaltenen Behälter 20 mit einem Volumenstrom von 400-700 I/Std. eingeleitet.

Über die erfindungsgemäße Begasungsvorrichtung 20a im Behälter 20 wird Luft inijiziert, wobei es zu einer Ausbildung von Mikroblasen unmittelbar in dem eingeleiteten mit Flockungsmittel versetzten Wasser kommt. Die Begasungsscheiben bzw. Begasungsplatten der Begasungsvorrichtung rotieren gleichsinnig mit einer Drehgeschwindigkeit von 180 rpm, wobei sich eine Phasenverschiebung von 180° ergibt. Die gebildeten Mikroblasen verbinden sich mit den Flocken zu Flocken-Luftblasen-Agglomeraten, die im weiteren Verlauf in die stromabwärts vorgesehene Flotationszelle 30 eingeführt werden. Durch die Anlagerung der Mikroblasen an die ausgeflockten organischen Bestandteile steigen die entsprechend gebildeten Agglomerate in der Flotationszelle in Richtung der Oberfläche der sich in der Flotationszelle 30 befindlichen Flüssigkeit und bilden auf der Wasseroberfläche eine Feststoffschicht aus, die mechanisch, zum Beispiel unter Verwendung von Scrapern, abgetrennt wird. Unterhalb dieser Feststoffschicht befindet sich das vorgereinigte Wasser in der Flotationszelle 30. Das so vorgereinigte Wasser wird unter Verwendung einer geeigneten Pumpe durch die in der Flotationszelle 30 angeordnete Filtrationseinheit 40 abgezogen und steht als gereinigtes Wasser der weiteren Aufarbeitung, wie zum Beispiel weiteren Entsalzungsprozessen, zur Verfügung. Um ein Fouling der Oberfläche der Filtrationseinheit 40 zu verhindern, kann über mit Löchern versehene Schläuche oder Rohre Luft unmittelbar auf die Oberfläche der Filtrationseinheit 40 geleitet werden, wodurch eine mechanische Entfernung von Ablagerungen auf der Oberfläche der Filtrationseinheit 40 bewirkt wird.

## Patentansprüche

1. Vorrichtung (1) zum Erzeugen von Gasblasen in einer Flüssigkeit in einem Behälter umfassend
- mindestens eine in mindestens einem Behälter angeordnete rotierbare gasdurchlässige Hohlwelle (3),
- auf der mindestens einen Hohlwelle (3) angeordnete Begasungsscheiben (4) und zwischen den Begasungsscheiben (4) angeordnete Abstandshalter (5), wobei Begasungsscheiben (4) und Abstandshalter (5) alternierend auf der Hohlwelle (3) in einem gasdichten Kontakt zueinander angeordnet sind,
- mindestens eine Zuleitung (2) für mindestens ein komprimiertes Gas in den Innenraum der mindestens einen rotierbaren Hohlwelle (3),
**dadurch gekennzeichnet, dass**
jeder der Abstandshalter (5) mindestens eine zentrierte Öffnung (O) zur Aufnahme der Hohlwelle (3) und mindestens zwei Kammern (K1, K2) aufweist,
wobei die mindestens zwei Kammern (K1, K2) gleichmäßig beabstandet um die zentrierte Öffnung (O) herum angeordnet sind,
wobei sich die zentrierte Öffnung (O) und die mindestens zwei Kammern (K1, K2) zumindest teilweise überlappen,
wobei die zentrierte Öffnung (O) und die mindestens zwei Kammern (K1, K2) zumindest im Überlappungsbereich in offener Kommunikation miteinander stehen, so dass das komprimierte Gas aus der Hohlwelle (3) in jeweils mindestens eine der Kammern (K1, K2) des Abstandhalters (5) strömen kann und aus der mindestens einen Kammer (K1, K2) des Abstandshalters (5) in die Begasungsscheiben (4) eintreten kann.

2. Vorrichtung nach Anspruch 1, **dadurch gekennzeichnet, dass** die mindestens eine Hohlwelle (3) in dem mindestens einen Behälter horizontal angeordnet ist.

3. Vorrichtung nach einem der vorhergehenden Ansprüche, **dadurch gekennzeichnet, dass** die Begasungsscheiben (4) kreisförmig ausgebildet sind und vertikal zur Hohlwelle auf der mindestens einen Hohlwelle (3) angeordnet sind.

4. Vorrichtung nach einem der vorhergehenden Ansprüche, **dadurch gekennzeichnet, dass** die Abstandshalter (5) kreisförmig ausgebildet sind.

5. Vorrichtung nach einem der vorhergehenden Ansprüche, **dadurch gekennzeichnet, dass** der Abstandshalter (5) mindestens drei kreisförmige Kammern (K1, K2, K3) aufweist, wobei die mindestens drei Kammern (K1, K2, K3) gleichmäßig beabstandet um die zentrierte Öffnung (O) herum angeordnet sind.

6. Vorrichtung nach einem der vorhergehenden Ansprüche, **dadurch gekennzeichnet, dass** die Geometrien, insbesondere die Durchmesser der Kammern des Abstandshalters (5) jeweils gleich sind.

7. Vorrichtung nach einem der vorhergehenden Ansprüche, **dadurch gekennzeichnet, dass** der mindestens eine Abstandshalter (5) mit einem äußeren Durchmesser dA_{außen} auf mindestens einer seiner kreisförmigen Seiten einen Absatz (5a) mit einem Durchmesser dA_{Absatz} aufweist, wobei dA_{Absatz} kleiner ist als dA_{außen}.

8. Vorrichtung nach Anspruch 7, **dadurch gekennzeichnet, dass** der mindestens eine Absatz (5a) des Abstandshalters (5) zur Aufnahme / Auflegen der Begasungsscheibe (4) dient.

9. Vorrichtung nach Anspruch 8, **dadurch gekennzeichnet, dass** die Begasungsscheibe (4) in Form eines Ringes mit einem inneren Umfang mit einem inneren Durchmesser dBᵢₙₙₑₙ und einem äußeren Umfang mit einem äußeren Durchmesser dB_{außen} vorliegt, wobei der innere Durchmesser dBᵢₙₙₑₙ der Begasungsscheibe (4) dem Durchmesser dA_{Absatz} des Absatzes (5a) des Abstandshalters mit einer Toleranz entspricht.

10. Vorrichtung nach einem der vorhergehenden Ansprüche, **dadurch gekennzeichnet, dass** die Begasungsscheibe (4) entlang des inneren Umfanges gleichmäßig verteilte Gasöffnungen aufweist.

11. Vorrichtung nach einem der vorhergehenden Ansprüche, **dadurch gekennzeichnet, dass** die Begasungsscheiben (4) keramische Begasungsscheiben mit einer mittleren Porengröße zwischen 0,05 µm und 20 µm, bevorzugt 0,1 µm und 10 µm, insbesondere bevorzugt zwischen 2 µm und 5 µm sind.

12. Vorrichtung nach einem der vorhergehenden Ansprüche, **dadurch gekennzeichnet, dass** auf der mindestens einen rotierbaren Hohlwelle zwischen 2 und 100, bevorzugt zwischen 10 und 50, insbesondere bevorzugt zwischen 15 und 30 Begasungsscheiben und Abstandshalter angeordnet sind.

13. Vorrichtung nach einem der vorhergehenden Ansprüche, **dadurch gekennzeichnet, dass** die mindestens eine Zuleitung (2) für das komprimierte Gas in die Hohlwelle und mindestens ein Antrieb zur Rotation der Hohlwelle an einem Wellenendstück oder an verschiedenen Wellenendstücken vorgesehen sind.

14. Verfahren zum Erzeugen von Gasblasen in einer Flüssigkeit in einem Behälter unter Verwendung von mindestens einer Vorrichtung nach einem der Ansprüche 1 bis 13, wobei das Verfahren die folgenden Schritte umfasst:
- Einführen eines komprimierten Gases in mindestens eine Zuleitung (2), wobei das komprimierte Gas direkt ohne Flüssigkeitsträger in die Zuleitung (2) eingetragen wird;
- Einführen des komprimierten Gases in den Innenraum der mindestens einen horizontal angeordneten rotierbaren Hohlwelle (3), wobei die mindestens eine Hohlwelle (3) mit einer Drehgeschwindigkeit zwischen 50 und 400 rpm, bevorzugt zwischen 100 und 300 rpm, insbesondere bevorzugt zwischen 180 und 220 rpm rotiert, und
- Eintragen des komprimierten Gases über die vertikal auf der horizontalen rotierenden Hohlwelle (3) angeordneten Abstandshalter (5) und Begasungsscheiben (4) in die Flüssigkeit unter Erzeugung von Gasblasen.

15. Verfahren nach Anspruch 14, **dadurch gekennzeichnet, dass** die in der Flüssigkeit erzeugten Blasen eine Blasengröße zwischen 1 µm und 200 µm, bevorzugt zwischen 20 µm und 80 µm, insbesondere zwischen 45 µm und 50 µm aufweisen.

## Claims

1. Device (1) for generating gas bubbles in a liquid in a container comprising
- at least one rotatable gas-permeable hollow shaft (3) arranged in at least one container,
- gassing discs (4) arranged on the at least one hollow shaft (3) and spacers (5) arranged between the gassing discs (4), wherein gassing discs (4) and spacers (5) are arranged alternately on the hollow shaft (3) in gas-tight contact with one another,
- at least one supply line (2) for at least one compressed gas into the interior of the at least one rotatable hollow shaft (3),
**characterised in that**
each of the spacers (5) has at least one centred opening (O) for receiving the hollow shaft (3) and at least two chambers (K1, K2),
wherein the at least two chambers (K1, K2) are evenly spaced around the centred opening (O),
wherein the centred opening (O) and the at least two chambers (K1, K2) at least partially overlap,
wherein the centred opening (O) and the at least two chambers (K1, K2) are in open communication with each other at least in the overlap region, so that the compressed gas can flow from the hollow shaft (3) into at least one of the chambers (K1, K2) of the spacer (5) in each case and can enter the gassing discs (4) from the at least one chamber (K1, K2) of the spacer (5).

2. Device according to claim 1, **characterised in that** the at least one hollow shaft (3) is arranged horizontally in the at least one container.

3. Device according to one of the preceding claims, **characterised in that** the gassing discs (4) are circular and are arranged vertically to the hollow shaft on the at least one hollow shaft (3).

4. Device according to one of the preceding claims, **characterised in that** the spacers (5) are circular.

5. Device according to one of the preceding claims, **characterised in that** the spacer (5) comprises at least three circular chambers (K1, K2, K3), the at least three chambers (K1, K2, K3) being evenly spaced around the centred opening (O).

6. Device according to one of the preceding claims, **characterised in that** the geometries, in particular the diameters of the chambers of the spacer (5) are in each case the same.

7. Device according to one of the preceding claims, **characterized in that** said at least one spacer (5) having an outer diameter dAₒᵤₜₑᵣ has on at least one of its circular sides, a shoulder (5a) having a diameter dA_{shoulder}, where dA_{shoulder} is smaller than dAₒᵤₜₑᵣ.

8. Device according to claim 7, **characterised in that** the at least one shoulder (5a) of the spacer (5) serves to receive / place the gassing disc (4).

9. Device according to claim 8, **characterized in that** the gassing disc (4) is in the form of a ring having an inner circumference with an inner diameter dBᵢₙₙₑᵣ and an outer circumference with an outer diameter dBₒᵤₜₑᵣ, the inner diameter dBᵢₙₙₑᵣ of the gassing disc (4) corresponding to the diameter dA_{shoulder} of the shoulder (5a) of the spacer with a tolerance.

10. Apparatus according to one of the preceding claims, **characterised in that** the gassing disc (4) has gas openings uniformly distributed along the inner periphery.

11. Device according to one of the preceding claims, **characterised in that** the gassing discs (4) are ceramic gassing discs with an average pore size between 0.05 µm and 20 µm, preferably 0.1 µm and 10µm, in particular preferably between 2 µm and 5 µm.

12. Device according to one of the preceding claims, **characterised in that** between 2 and 100, preferably between 10 and 50, in particular preferably between 15 and 30 gassing discs and spacers are arranged on the at least one rotatable hollow shaft.

13. Device according to one of the preceding claims, **characterised in that** the at least one supply line (2) for the compressed gas into the hollow shaft and at least one drive for rotating the hollow shaft are provided on one shaft end piece or on different shaft end pieces.

14. A method of generating gas bubbles in a liquid in a container using at least one device according to one of claims 1 to 13, the method comprising the steps of:
- introducing a compressed gas into at least one supply line (2), the compressed gas being introduced directly into the supply line (2) without a liquid carrier;
- introducing the compressed gas into the interior of the at least one horizontally arranged rotatable hollow shaft (3), wherein the at least one hollow shaft (3) rotates at a rotational speed between 50 and 400 rpm, preferably between 100 and 300 rpm, in particular preferably between 180 and 200 rpm, and
- introducing the compressed gas via the spacers (5) and gassing discs (4) arranged vertically on the horizontal rotating hollow shaft (3) into the liquid, generating gas bubbles.

15. The method according to claim 14, **characterized in that** the bubbles produced in the liquid have a bubble size between 1 µm and 200 µm, preferably between 20 µm and 80 µm, in particular between 45 µm and 50 µm.

## Revendications

1. Dispositif (1) de production de bulles de gaz dans un liquide dans un contenant, comprenant
- au moins un arbre creux (3) perméable aux gaz, rotatif, disposé dans au moins un contenant,
- des disques de gazéification (4) disposés sur l'au moins un arbre creux (3) et des espaceurs (5) disposés entre les disques de gazéification (4), dans lequel des disques de gazéification (4) et des espaceurs (5) sont disposés en un contact étanche aux gaz les uns par rapport aux autres en alternance sur l'arbre creux (3),
- au moins un conduit d'arrivée (2) pour au moins un gaz comprimé dans l'espace intérieur de l'au moins un arbre creux (3) rotatif,
**caractérisé en ce que**
chacun des espaceurs (5) présente au moins une ouverture (O) centrée pour loger l'arbre creux (3) et au moins deux chambres (K1, K2),
dans lequel les au moins deux chambres (K1, K2) sont disposées tout autour de l'ouverture (O) centrée à distance de manière homogène,
dans lequel l'ouverture (O) centrée et les au moins deux chambres (K1, K2) se chevauchent au moins en partie,
dans lequel l'ouverture (O) centrée et les au moins deux chambres (K1, K2) se trouvent dans une communication ouverte les uns avec les autres au moins dans la zone de chevauchement de sorte que le gaz comprimé peut s'écouler depuis l'arbre creux (3) dans respectivement au moins une des chambres (K1, K2) de l'espaceur (5) et peut entrer depuis l'au moins une chambre (K1, K2) de l'espaceur (5) dans les disques de gazéification (4).

2. Dispositif selon la revendication 1, **caractérisé en ce que** l'au moins un arbre creux (3) est disposé de manière horizontale dans l'au moins un contenant.

3. Dispositif selon l'une quelconque des revendications précédentes, **caractérisé en ce que** les disques de gazéification (4) sont réalisés en forme de cercle et sont disposés de manière verticale par rapport à l'arbre creux sur l'au moins un arbre creux (3).

4. Dispositif selon l'une quelconque des revendications précédentes, **caractérisé en ce que** les espaceurs (5) sont réalisés en forme de cercle.

5. Dispositif selon l'une quelconque des revendications précédentes, **caractérisé en ce que** l'espaceur (5) présente au moins trois chambres (K1, K2, K3) circulaires, dans lequel les au moins trois chambres (K1, K2, K3) sont disposées tout autour de l'ouverture (O) centrée à distance de manière homogène.

6. Dispositif selon l'une quelconque des revendications précédentes, **caractérisé en ce que** les géométries, en particulier les diamètres des chambres de l'espaceur (5) sont respectivement identiques.

7. Dispositif selon l'une quelconque des revendications précédentes, **caractérisé en ce que** l'au moins un espaceur (5) avec un diamètre extérieur dA_{extérieur} présente sur au moins un de ses côtés circulaires un retrait (5a) avec un diamètre dAretrait, dans lequel dAretrait est inférieur à dA_{extérieur}.

8. Dispositif selon la revendication 7, **caractérisé en ce que** l'au moins un retrait (5a) de l'espaceur (5) sert à loger/placer le disque de gazéification (4).

9. Dispositif selon la revendication 8, **caractérisé en ce que** le disque de gazéification (4) est présent sous la forme d'un anneau avec une périphérie intérieure avec un diamètre intérieur dBintérieur et une périphérie extérieure avec un diamètre extérieur dB_{extérieur}, dans lequel le diamètre intérieur dB_{intérieur} du disque de gazéification (4) correspond au diamètre dAᵣₑₜᵣₐᵢₜ du retrait (5a) de l'espaceur avec une tolérance.

10. Dispositif selon l'une quelconque des revendications précédentes, **caractérisé en ce que** le disque de gazéification (4) présente des ouvertures de gaz réparties de manière homogène le long de la périphérie intérieure.

11. Dispositif selon l'une quelconque des revendications précédentes, **caractérisé en ce que** les disques de gazéification (4) sont des disques de gazéification en céramique avec une taille de pores moyenne entre 0,05 µm et 20 µm, de manière préférée 0,1 µm et 10 µm, en particulier de manière préférée entre 2 µm et 5 µm.

12. Dispositif selon l'une quelconque des revendications précédentes, **caractérisé en ce qu'**entre 2 et 100, de manière préférée entre 10 et 50, en particulier de manière préférée entre 15 et 30 disques de gazéification et des espaceurs sont disposés sur l'au moins un arbre creux rotatif.

13. Dispositif selon l'une quelconque des revendications précédentes, **caractérisé en ce que** l'au moins un conduit d'arrivée (2) pour le gaz comprimé dans l'arbre creux et au moins un entraînement pour la rotation de l'arbre creux sont prévus sur une pièce d'extrémité d'arbre ou sur différentes pièces d'extrémité d'arbre.

14. Procédé de production de bulles de gaz dans un liquide dans un contenant en utilisant au moins un dispositif selon l'une quelconque des revendications 1 à 13, dans lequel le procédé comprend les étapes suivantes :
- l'introduction d'un gaz comprimé dans au moins un conduit d'arrivée (2), dans lequel le gaz comprimé est introduit directement dans le conduit d'arrivée (2) sans support liquide ;
- l'introduction du gaz comprimé dans l'espace intérieur de l'au moins un arbre creux (3) rotatif disposé horizontalement, dans lequel l'au moins un arbre creux (3) tourne avec une vitesse de rotation entre 50 et 400 rpm, de manière préférée entre 100 et 300 rpm, de manière particulièrement préférée entre 180 et 220 rpm, et
- l'introduction du gaz comprimé par l'intermédiaire des espaceurs (5) disposés verticalement sur l'arbre creux (3) rotatif horizontal et les disques de gazéification (4) dans le liquide en produisant des bulles de gaz.

15. Procédé selon la revendication 14, **caractérisé en ce que** les bulles produites dans le liquide présentent une taille de bulle entre 1 µm et 200 µm, de manière préférée entre 20 µm et 80 µm, en particulier entre 45 µm et 50 µm.
